# EUROPEAN PATENT APPLICATION

(11) **EP 1 334 902 A1**
(43) Date of publication of application: **13.08.2003**
(21) Application number: 01976320.0
(22) Date of filing: 19.10.2001
(51) Int. Cl.: B62H 5/08, B62K 23/04

(54) **ANTI-THEFT GAS GRIP FOR MOTORCYCLES AND THE LIKE**

(30) Priority: 20.10.2000 ES 200002524
(71) Applicant: Amigo Alvarez, Antonio, 08950 Esplugues de Llobregat (ES)
(72) Inventor: Amigo Alvarez, Antonio, 08950 Esplugues de Llobregat (ES)
(74) Representative: Curell Aguilà, Marcelino
(86) International application number: ES0100395
(87) International publication number: WO02032746

(57) **Abstract**

This invention relates to an anti-theft gas grip for motorcycles and the like. Said grip includes a primary actuator which receives the rotational movement of the hand of the driver, a secondary actuator capable of receiving the rotational movement of the primary actuator and transmitting said movement to the pulley, and locking/unlocking means which - in the locked position - engage the primary actuator with the secondary actuator, allowing such to receive said movement, and which - in the unlocked position - disengage both actuators from each other, thereby preventing the secondary actuator, and thus the pulley, from receiving the rotational movement of the primary actuator.

Applicable for providing motorcycles with anti-theft characteristics, in a simple and efficient manner.

## Description

### Field of the invention

The invention relates to an anti-theft gas grip for motorcycles and the like.

More particularly, the gas grip to which the invention applies is of the general known type arranged at one of the ends of the handlebar and basically constituted by a tubular control substantially secured in the axial direction of the handlebar but able to be rotated, by the hand of the driver, around a distal end of the handlebar, in order, by means of a pulley, lever or the like arranged in a casing, to exert traction on a gas cable coupled to the motorcycle carburetion system, which is provided with means of automatic return of the carburetion system and of the tubular control to the idling position, when the rotational action exerted by the hand of the driver ceases.

### State of the art

Among the innumerable anti-theft devices for motorcycles, there exist those which try to avoid that unauthorised persons may actuate the carburetion system which is usually controlled by means of one of the two grips of the handlebar ("gas grip"), usually the right-hand grip. Thus, said devices prevent such persons accelerating the motor above idling speed.

In order to achieve the above, one of the known devices implies, for example, assembling and disassembling the carburetion system control assembly together with the grip thereto, with respect to the corresponding end of the handlebar. In the anti-theft position, the motorcycle is deprived of a gas grip (and other elements of carburetion system control) which the authorised driver carries with him, being able to replace such in their operating position on the handlebar, when said driver wishes to drive the motorcycle.

One of the disadvantages of this type of anti-theft gas grip resides in the trouble caused the driver in having to carry said grip on his person.

### Summary of the invention

The invention proposes to eliminate the drawbacks suffered by the known anti-theft devices, for motorcycles with gas grip of the general known type mentioned above.

More particularly, the invention proposes to make available a gas grip with an anti-theft function which can be activated and disactivated by means of a key, so that it is not necessary to repeatedly disassemble and assemble the grip assembly from the motorcycle handlebar.

### Explanation of the invention

The above mentioned objectives and other advantages of the invention are achieved by means of the adoption of an anti-theft gas grip of the general type recalled in the preamble, in which said control is constituted by a primary actuator, which receives the rotational movement of the hand of the driver, and by a secondary actuator, capable of receiving the rotational movement of the primary actuator and of transmitting such to the pulley, there being provided locking/unlocking means which - in the locked position - engage the primary actuator with the secondary actuator, allowing the secondary actuator to receive the movement of the primary actuator, and which - in the unlocked position - disengage the actuators from each other, preventing that the secondary actuator, and thus also the pulley, receive the rotational movement of the primary actuator, such locking/unlocking means consisting in a lock with at least one lock bolt capable of being introduced in at least one lock catch.

The object of the invention consists in that the body of the lock is immovably secured in the primary actuator and the lock catch or the lock catches are arranged in the secondary actuator.

The invention envisages that the primary actuator is made from mechanically resistant material, such as steel, titanium, etc.

A characteristic of the invention consists in that the primary and secondary actuators, which are coaxial with respect to each other and with respect to a distal end of the handlebar on which is rotationally arranged the assembly of such, are limited in their axial movement by means of the stop effected by an end centrifugal flange of the primary actuator and the pulley, lever or the like of the secondary actuator, with the interior walls of the protective casing securely mounted on the handlebar.

Another characteristic of the invention lies in the fact that the primary and secondary actuators, coaxial with respect to each other and with respect to an end of the handlebar on which is rotationally arranged the assembly of such, are limited in their axial movement by means, with respect to one end, of the stop which the pulley, lever or the like of the secondary actuator effects with the interior walls of the protective casing securely mounted on the handlebar, and with respect to the other end, by the withholding exerted on a stop member of the primary actuator by a centripetal lip of the secondary actuator. The stop member of the primary actuator, which is acted upon by the centripetal lip of the secondary actuator forms part of the body of the lock secured to said primary actuator. The stop member of the body of the lock of the primary actuator, with respect to the centripetal lip of the secondary actuator, consists in one of the group which includes stops formed by a flange, radial teats and an open elastic washer ("circlip").

Another characteristic of the invention lies in the secondary actuator consisting of a member obtained by injection and forming a single member with the pulley, lever or the like situated at one end, whilst at the other end it includes a metallic mounting at least in the area in which the lock catch is implemented.

Other additional characteristics of the invention, consist in that the secondary actuator is constituted by a primary tubular member obtained by injection which, at one end, includes the stop lip and a metallic mounting for the lock catch and, at the other end, has means for practicable coupling to a second replaceable member which constitutes the pulley, lever or the like.

### Brief description of the drawings

The invention will be more easily understood with the help of the appended drawings, in which:
Figure 1 is a plan view from above of the upper forward part of a motorcycle, showing the most usual arrangement of the gas grip, at the right distal end of the handlebar;
Figure 2 is a perspective view, from the rear, partially sectionalised and disassembled, of the conventional gas grip assembly, of Figure 1;
Figure 3 is an axial sectional view of an end of the handlebar provided with the anti-theft gas grip in accordance with the invention;
Figure 4 is a cross-sectional view according to line IV-IV of Figure 3;
Figure 5 is a perspective view, and disassembled, of some of the constitutive members of the gas grip of Figures 3 and 4;
Figure 6 is a perspective view, from the rear, which shows the external appearance of the gas grip in accordance with the invention;
Figures 7 - 13 are views showing, in particular, various manners in which the distal end of the secondary actuator could be embodied; and
Figures 14 - 17 are views which show another manner of designing the lock bolt and the action thereof;
Figure 18 is a perspective view of the gas grip, with the handle axially sectionalised, in the case in which it is an accessory for the motorcycle.
Figure 19 is an axial sectional view of one end of the handlebar which incorporates the anti-theft accessory of Figure 18;
Figure 20 is a partial sectional view of an alternative organisation of the end of the primary actuator; and
Figure 21 is a partial perspective view of an embodiment of the secondary actuator, in which the pulley, lever or the like constitute a member independent of the tubular part of the same, which is constant for a range of said independent members.

### Succinct description of the conventional art

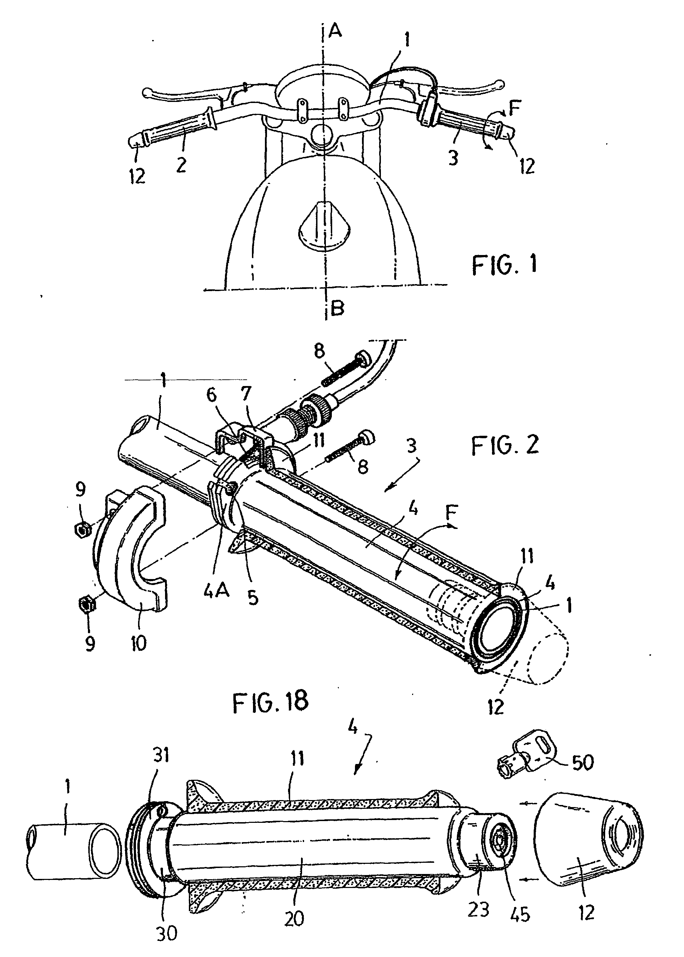

To ease comprehension of the object of the invention the conventional art will firstly be described, with reference to Figures 1 and 2.

It should be noted that with reference to grip 1 or to control 4, or further in the specification with reference to actuators 20 and 30, mention is made of the "proximal end" thereof or the "distal end" thereof, the first term is applied to the end closest to the central vertical plane, along line A-B as represented in Figure 1, and the second expression is applied to the end furthest from said plane.

As represented in Figure 1, the upper forward part of a motorcycle includes, in addition to other members having no relevance to this invention, a duly shaped pipe which forms the handlebar 1. In each distal end of the handlebar 1 is to be found a grip 2, 3. One of the grips, 2 in the embodiment described, is rigidly secured both axially and circumferentially, at the corresponding end of the handlebar 1, whilst the other grip, 3 in the embodiment as described, has a secured axial position with respect to handlebar 1, but may rotate circumferentially around said handlebar, in accordance with the arrow F. The rotational grip 3 is the motorcycle gas grip and the conventional structure thereof is described in greater detail, with reference to Figure 2, in which the corresponding end of handlebar 1 and the conventional assembly of the gas grip 3 are illustrated.

On the right distal end of the handlebar 1 is to be found a control 4, capable of rotating circumferentially, in accordance with arrow F, around handlebar 1.

The control 4 includes, at the proximal end thereof, a pulley 4A which secures the end stop 5 of a control cable 6 which, at the other end thereof, is connected with the rest of the carburetion system, provided with an idling position return spring. The representation and the description of the rest of the carburetion system has been omitted because it is conventional and such is not necessary in order to understand the invention.

The pulley 4A is jacketed by a casing 7, to which is secured, by means of threaded screws 8 and nuts 9, a cover 10. The conjunction of the vertical lateral walls of the pulley 4A with the corresponding vertical internal walls of the casing 7 and the cover 10 ensure that the control 4 remains axially secure with respect to the handlebar 1.

The exterior cylindrical member of the control 4 is usually covered with a sheath 11 of synthetic resin, force mounted on the control 4, and thus fixed with respect to the latter. The sheath 11 is designed to provide the control 4 with the desirable characteristics for achieving a comfortable and firm grip with the hand.

The manual action of the driver on the sheath 11, in the anticlockwise direction of arrow F, means that traction is exerted on the cable 6, which in turn opens the carburettor throttle in order to accelerate the motor. When the anticlockwise manual action ceases, the return spring or springs of the carburetion system ensure that said, including the gas grip 3 with the control 4 and the sheath 11 thereof are returned to idling position.

Finally, the conventional gas grip 3 is usually provided (as in the immobile grip 2) with an ornamental cap 12, designed to hide the corresponding distal end of the handlebar 1, the control 4 and sheath 11 thereof.

### Detailed description of the preferred embodiments of the invention

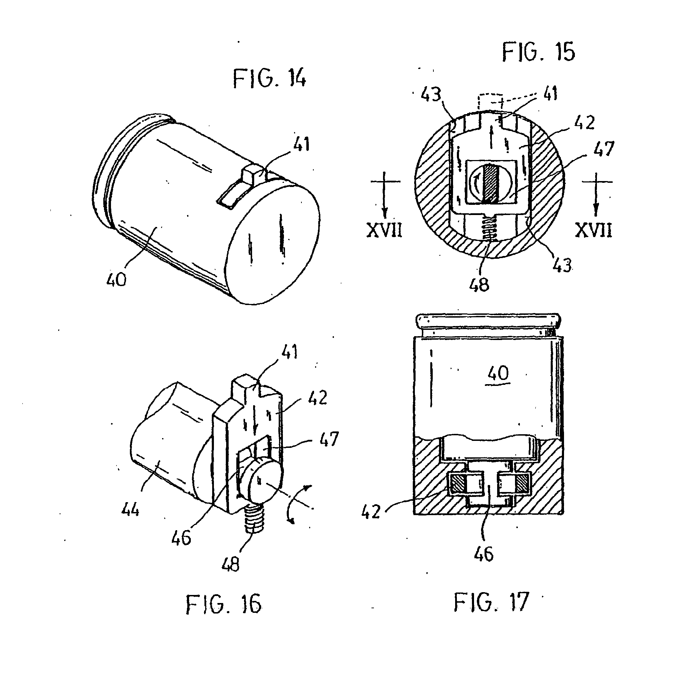

Passing now to Figure 17, a control 4 of the gas grip in accordance with the invention is illustrated, mounted on the right distal end of the handlebar 1. The control 4 consists basically, in accordance with the invention, of a primary actuator 20, which shall be discussed further below, and by a secondary actuator 30.

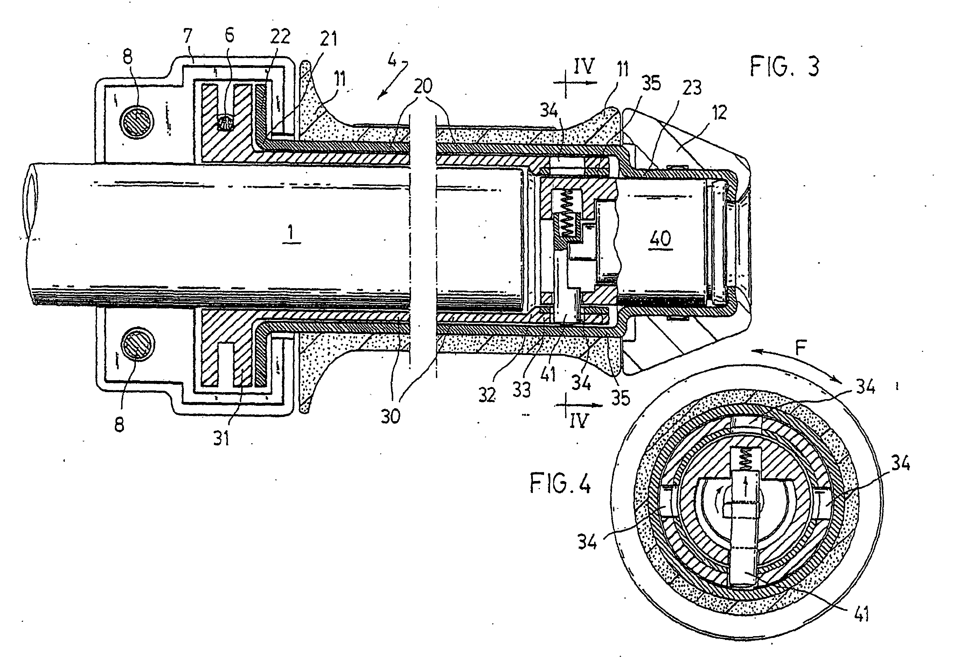

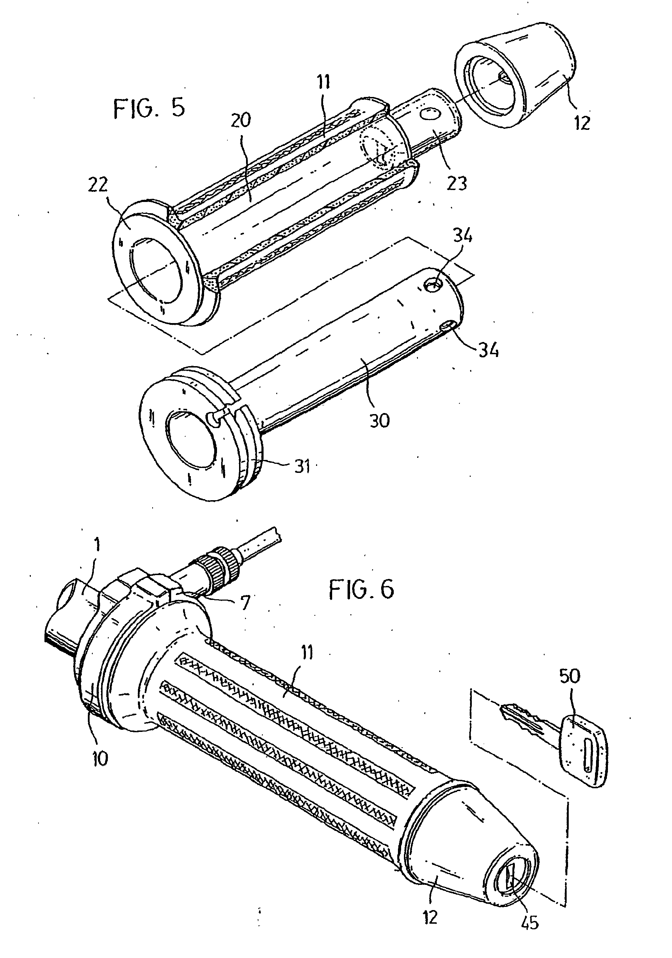

The secondary actuator 30 is capable of revolving in a circumferential arc, in accordance with the arrow F, with respect to the handlebar 1 and includes, at the proximal end, the lever or pulley 31 in which the control cable 6 is secured, as is known for conventional controls 4 (Figure 2). The area in which the pulley 31 is located is jacketed by the casing 7, as in Figure 2, and provided with the corresponding conventional cover 10 (Figures 2 and 6) in such manner that the conjunction of the lateral vertical walls of the pulley 31 and the corresponding internal vertical walls of the casing 7 and the cover 10 thereof ensure that the secondary actuator 30 remains axially secure with respect to the handlebar 1, although it may still rotate, clockwise or anticlockwise, with respect to said handlebar (Figure 4, arrow F).

It may be observed that the secondary actuator 30 extends a little further beyond the corresponding distal end of the handlebar 1 and that, in the area of such extension, the distal end 32 of the secondary actuator 30 includes a thickening 33 in which various radial perforations or lock catches 34 have been performed.

Axially secured on the secondary actuator 30, is to be found the primary actuator 20, made from mechanically resistant material, such as steel. The primary actuator 20 has, at the proximal end 21 thereof, a flange 22, capable of being withheld axially between the vertical walls of the pulley 31, the casing 7 and the cover 10 thereof. The distal end 23 of the primary actuator 20 has a lesser diameter than the rest of the body of the primary actuator 20 and houses a lock 40, strongly mounted in the interior of said distal end 23. Measurements are designed in such manner that the lock bolt 41 of the lock 40 may be introduced into any of the radial perforations or lock catches 34 of the secondary actuator 30. In Figures 3 and 4, the lock bolt 41 is represented as having been introduced into one of such lock catches 34 (position in which the lock 40 engages the secondary actuator 30 with the primary actuator 20). In addition, the internal diameter of the primary actuator 20, in the area in which it covers the external surface of the secondary actuator 30, is slightly larger than the diameter of said surface, and thus the primary actuator 20 may freely rotate with respect to the secondary actuator 30, in both directions of the arrow F, when the lock bolt 41 is retracted inside the body of the lock 40, which is to say removed from the lock catch 34.

The larger diameter exterior cylindrical area of the primary actuator 20 is covered with a conventional sheath 11 of synthetic resin, force mounted on the primary actuator 20, and thus secured with respect to the latter.

Supposing that the lock bolt 41 is found in the position according to Figures 3 and 4 (locking or engaging both actuators 20 and 30 with respect to each other) the manual action of the driver on the sheath 11, in the anticlockwise direction of the arrow F, will result in the primary actuator 20 rotating anticlockwise, thus also causing the lock catch 40 and the lock bolt 41 to rotate. The rotation of the lock bolt 41 is transmitted by the lock catch 34 wall to the secondary actuator 30 which, by means of the lever or pulley 31, exerts traction on cable 6, thus accelerating the motorcycle motor. As is conventional, once the action of the driver's hand in the anticlockwise direction of the arrow F ceases, the return spring of the carburetion system shall return such to the idling position, thus the secondary actuator 30 is drawn in the clockwise direction of the arrow F to the end of the travel thereof by means of the cable 6 and the pulley 31, remaining in said idling position. During such return movement, the secondary actuator 30, by means of the wall 34 of the lock catch and by means of the lock bolt 41, draws the primary actuator 20 to said idling position.

Supposing that the lock bolt 41 is found in the unlocked position, which is to say retracted inside the body of the lock 40, both actuators, primary 20 and secondary 30, are disengaged from each other and the primary actuator 20 assembly, with the sheath 11 and lock catch 40 thereof, may rotate under the action of the hand in either of the directions of the arrow F, but the rotational movement thereof shall not be transmitted to the secondary actuator 20, and thus it is not possible to increase the supply of gas to the motorcycle motor.

As can be observed in the right end of the Figures 3, 5 and 6, the distal end 23 of the primary actuator 20 can be fitted with an ornamental cap 12, open at the end in order to allow the key 50 to be inserted in the keyhole 45 of the lock 40.

In the preferred embodiments, the secondary actuator 30 is a moulded or injected member of synthetic resin which forms a singe body with the pulley 31 and which includes the lock catch or lock catches 34. In the Figure 3 representation, such lock catches 34 are implemented in the thickening 33 which may be observed in the distal end of the secondary actuator 30. It is obviously necessary that the lock bolt 41 of the lock 40 be introduced smoothly and precisely in the lock catches 34 and that the interior walls of the lock catches 34 are capable of transmitting the force of the primary actuator 20 to the secondary actuator 30 and vice versa. From this point of view, the majority of the synthetic resins adequate for injection moulding of the secondary actuator 30 may not be strong enough, which would give rise to deformation of the lock catches 34 which would in turn result in alignment errors with respect to the lock bolt or lock bolts 41.

To avoid such drawback, in the embodiment illustrated in Figure 3 it has been provided that the thickening 33 be reinforced by means of a mounting 35, for example steel or other metal, which may be embedded in said thickening 33 when injecting the secondary actuator 30.

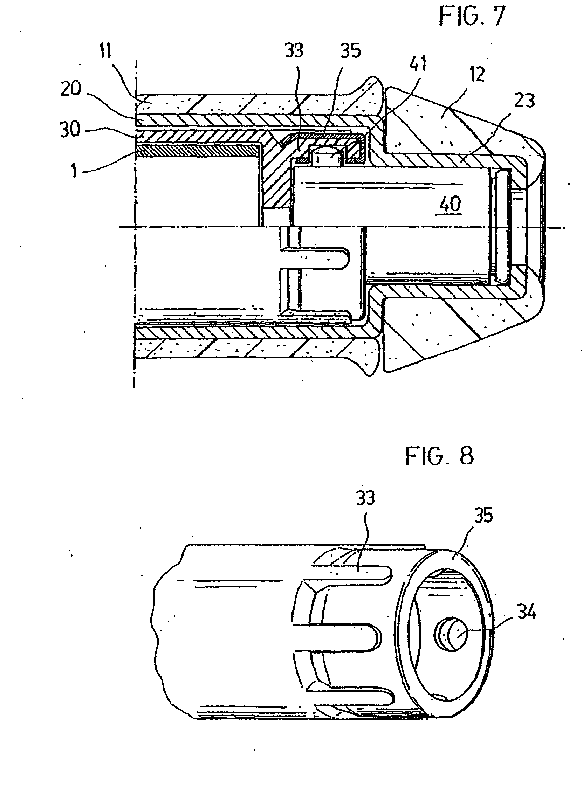

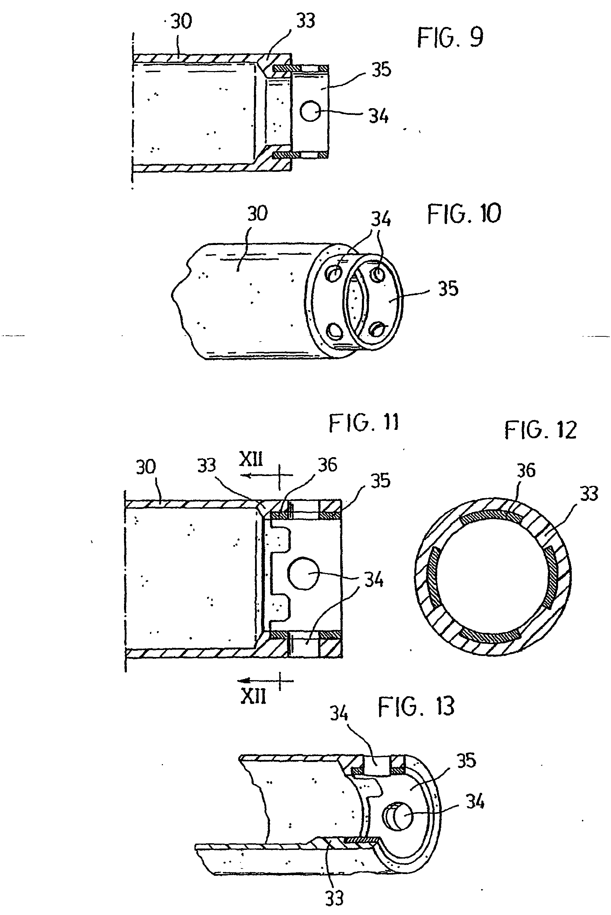

Other alternative forms of the distal end of the secondary actuator 30 are given, as an example, in Figures 7 to 13. In Figures 7 and 8 an embodiment is illustrated in which the mounting 35 substantially reinforces all of the distal end of the secondary actuator 30. In the embodiment of Figures 9 and 10, the metallic mounting 35 extends in cantilever beyond the distal end of the thickening 33, whilst in the embodiment of Figures 11 to 13 the metallic mounting 35 lines the interior wall of the thickening 33, presenting axial prolongations 36 to improve the anchorage between the synthetic resin and the metal.

The lock 40 is, preferably, a quarter-turn lock, such that a 90° turn of the key 50 (Figure 6) in the keyhole 45 results in the extension or retraction of the lock bolt 41. Such locks are in themselves conventional and are to be found on the market.

However, the inventor has obtained good results with a lock manufactured expressly and which, with respect to the non conventional aspects thereof, is illustrated in detail in Figures 14 - 17. The lock 40 has a lock bolt 41 which extends from a slider 42 which can moved within an internal guide 43 of the end of the lock 40 opposite to the keyhole (not illustrated). The conventional barrel 44 of the lock 40 ends in a lever 46, with respect to which an opening 47 of the slider 42 acts as a follower, such that a 90° turn of the key results in the lock bolt 41 passing from the extended position which is represented in Figure 14 to the retracted position which is represented with a solid line in Figure 15, and vice versa. A spring 48 maintains the slider 42 and the lock bolt 41 thereof in the extended position. Such embodiment of the lock 40, although not to be found on the market, has the advantage of being robust and accurate in guiding the lock bolt 41.

In the embodiments described, for example, above, the primary actuator 20 constitutes a shield which surrounds and completely protects the secondary actuator 30. In addition, the fact that, in the unlocked position, the primary actuator 20, together with the lock 40, may freely revolve with respect to the secondary actuator 30, renders forcing of the lock difficult, since there is no firm point from which one could exert sufficient leverage with the aim of tampering with the lock.

It can be seen that the gas grip according to the invention provides an efficient, comfortable and cheap anti-theft device. The external appearance of the grip (refer to Figure 6) is hardly any different from the forms conventionally adopted. For the manufacture of the secondary actuator 30, the new device requires only a modification of the mould which in the conventional art is used for the injection of the control 4, whilst the actuator 20 may be cheaply manufactured by injection or shaping of resistant synthetic resins or metals, such as low alloy steel and the like. The lock 40 which (as has been said) in certain embodiments may be obtained in the market, does not necessarily imply an increase in cost with respect to the conventional grip, since such lock 40 removes the need for some of the locks currently used to immobilise, for example, the steering column or for temporarily cutting the electric circuit.

It is well known that motorcycles and scooters etc, which are expensive products with a relatively light weight, are never exempt from expert theft, which can be carried out with certain facility given adequate means for transporting the motorcycle to a workshop where the anti-theft devices can be easily disabled. Nevertheless, most often the disappearance of such vehicles is the result of so-called "everyday theft" carried out by persons who, when performing the theft, do not have very precise mechanical knowledge nor powerful tools. The anti-theft gas grip according to the invention is designed with such theft specifically in mind. It is to be noted that to disable such, an unauthorised person can only: a) turn the lock 40 using a false key; b) open the cover 7, eliminate the primary actuator 20 and the sheath 11 and reassemble the cover 7, which requires specific tools and a certain competence; or c) deform the sheath 11 and the primary actuator 20, radially, in order to be able to rotate the secondary actuator 30 from the exterior; this last possibility not only requires adequate and strong tools, but could be obviated if the materials and thicknesses of the primary actuator 20 wall are conveniently chosen.

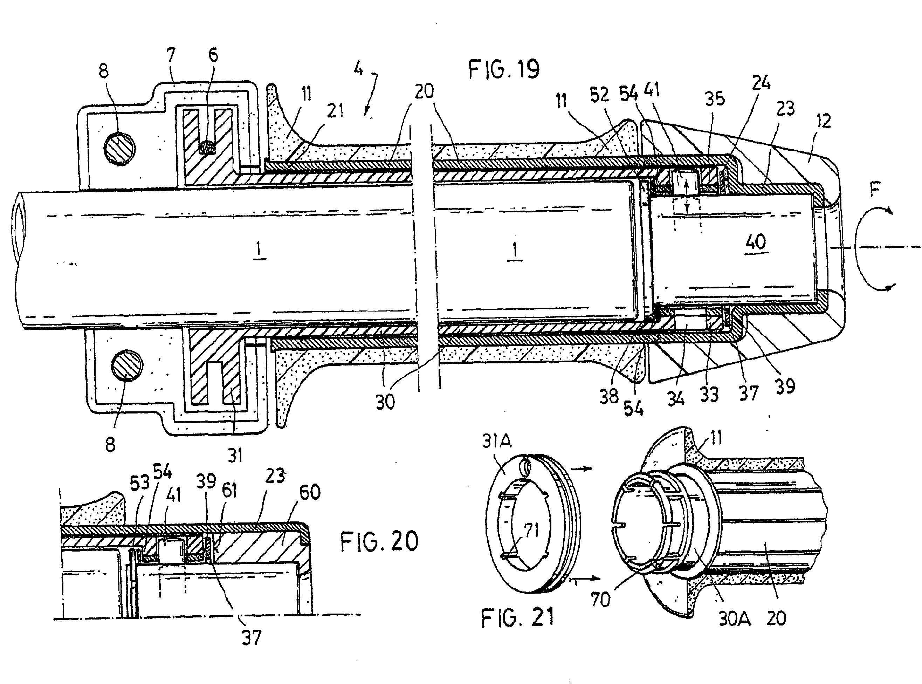

In Figure 18 one can see a perspective view of the anti-theft gas grip in accordance with the invention, showing the control 4 assembly, composed by the primary actuator 20, to which is added the sheath 11 of synthetic material - shown here in a partly sectionalised view - butt mounted against a thickening, and with a distal end 23 provided with an opening in order to access the keyhole 45 with a key 50. On this distal end the ornamental cap 12 is mounted.

Coaxially and internally mounted on said primary actuator 20 is found the secondary actuator 30, provided with a pulley or lever 31 at the proximal end thereof with respect to the handlebar 1, on which the entire assembly 4 shall be mounted.

As can be observed in this Figure the anti-theft gas grip according to the invention consists in itself of an assembly of already-assembled members capable of being incorporated in the motorcycle as an accessory member substituting the conventional accelerator control or gas grip which the motorcycle carried previously.

Passing now to Figure 19, which illustrates a gas grip control 4 in accordance with the invention, mounted on the right distal end of the handlebar 1. The control 4 is basically constituted, in accordance with the invention, by a primary actuator 20, which shall be further discussed below, and by a secondary actuator 30.

The secondary actuator 30 is capable of rotating in a circumferential arc. in accordance with the arrow F. with respect to the handlebar 1 and includes, at the proximal end, the lever or pulley 31 in which the cable 6 of the control is secured, as is known for conventional controls 4 (Figure 2). The area in which is situated the pulley 31 is jacketed by the protective casing 7, analogue to that of Figure 2 and provided with the corresponding conventional protective cover 10 (Figures 2 and 19), in such manner that the conjunction of the lateral vertical walls of pulley 31 with the corresponding internal vertical walls of said casing 7 and the cover 10 thereof determine that the secondary actuator 30 remains axially secure with respect to handlebar 1, though it may rotate, clockwise or anticlockwise, with respect to said handlebar (Figures 2 and 4, arrow F).

One may observe that the secondary actuator 30 extends a little further beyond the corresponding distal end of the handlebar 1 and that, in the area of such extension, the distal end 32 of the secondary actuator 30 includes a thickening 33 in which have been performed various radial perforations or lock catches 34.

Attached axially on the secondary actuator 30, is to be found the primary actuator 20, of a mechanically resistant material. The distal end 23 of the primary actuator 20 may have a diameter less than the rest of the body of the primary actuator 20 and houses a lock 40, firmly mounted in the interior of said distal end 23. Measurements are designed in such manner that the lock bolt 41 of the lock 40 may be introduced into any of the radial perforations or lock catches 34 of the secondary actuator 30. In Figure 19, the lock bolt 41 is represented as introduced in one of such lock catches 34 (position in which the lock 40 engages the secondary actuator 30 with the primary actuator 20). Furthermore, the internal diameter of the primary actuator 20, in the area in which it covers the external surface of the secondary actuator 30, is slightly larger than the diameter of such surface, such that the primary actuator 20 may rotate freely with respect to the secondary actuator 30, in both directions of the arrow F, when the lock bolt 41 is found retracted within the body of the lock 40, which is to say removed from the lock catch 34.

The larger diameter external cylindrical part of the primary actuator 20 is covered with a conventional sheath 11 of synthetic resin, force mounted on the primary actuator 20, and thus secure with respect thereto, the side thereof proximal to the handlebar butting against a thickening of said primary actuator.

Supposing that the lock bolt 41 is found in the position of Figure 19 (locking or engaging both of the actuators 20 and 30 with respect to each other), the manual action of the driver on the sheath 11, in the anticlockwise direction of the arrow F, determines that the primary actuator 20 rotates anticlockwise, rotating with it the lock 40 and the lock bolt 41. The rotation of the lock bolt 41 is transmitted by the wall of the lock catch 34 to the secondary actuator 30 which, by means of the lever or pulley 31 thereof, exerts traction on the cable 6, and thereby accelerates the motorcycle motor. Conventionally, when the action of the hand of the driver in the anticlockwise direction of the arrow F ceases, the return spring of the carburetion system shall return such to the idling position, such that the secondary actuator 30 is drawn in the clockwise direction of the arrow F, by the cable 6 and the pulley 31, to the end of the travel thereof, remaining in said idling position. During such return movement, the secondary actuator 30, by means of the wall 34 of the lock catch and by means of the lock bolt 41, drags the primary actuator 20 to said idling position.

Supposing that the lock bolt 41 is found in the unlocked position, which is to say, retracted within the body of the lock 40, both actuators, primary 20 and secondary 30, are disengaged from each other and the assembly of the primary actuator 20, with the sheath 11 and lock 40 thereof, may rotate subject to the action of the hand in any of the directions of the arrow F, but the rotation thereof shall not be transmitted to the secondary actuator 20, such that it is not possible to increase the supply of gas to the motorcycle motor.

As can be observed at the right end of Figure 19, the distal end 23 of the primary actuator 20 may be provided with an ornamental cap 12, open at the end to allow the key 50 to access the keyhole 45 of the lock 40.

In the embodiments illustrated in Figures 18 and 19, the secondary actuator 30 is a moulded or injected member of synthetic resin which forms a single body with the pulley 31 and which includes the lock catch or lock catches 34. Such lock catches 34 are implemented in the thickening 33 which may be observed in the distal end of the secondary actuator 30 and which, in turn, incorporates a mounting 35, for example in steel or other metal, which can be embedded in said thickening 33 when injecting the secondary actuator 30.

Furthermore in the distal end of the primary actuator are to be found the axial withholding members which maintain the coaxial positioning between the primary actuator 20 and the secondary actuator 30. There are two groups of withholding members. In one respect the group of members responsible for preventing the outside extraction of the primary actuator, or better said, distancing it from the A-B longitudinal axis of the motorcycle, which group is constituted by the flange 52 which incorporates the body of the lock 40 housed within the distal end 23 of the primary actuator which in turn bears against the centripetal lip 54 formed by the thickening 33 which incorporates the distal end of the secondary actuator 30. Said abutment is performed with interposition of the washer 38 in order to minimise the friction in the mechanical contact between the two members. In another respect, there is the additional group of members responsible for preventing the penetration of the primary actuator 20 on the secondary actuator 30 in the sense of approach towards the motorcycle A-B longitudinal axis. Constituted by the interior wall of lip 24 shaped in the distal end 23 of the primary actuator, and bearing against the circular face 37 of the thickening 33 of the secondary actuator. In turn, as in the previously mentioned abutment, this is performed with interposition of the corresponding anti-friction washer 39.

In Figure 20 one can observe an alternative embodiment of the arrangement of the distal end 23 of the primary actuator, characterised in that the lock 40 is not incorporated directly in said distal end 23 but instead such, having a constant diameter, incorporates an interior member 60 which in turn houses the lock 40, the interior wall 61 of said member 60 performing the function of guard or stop against the washer 39 and the circular face 37 which previously was performed by the interior wall of lip 24 shown in the previous Figure 19. In addition, one can observe in said Figure 20 an alternative design for the abutment flange of lock 40 constituted in this case by an open elastic washer or "circlip" 53 which is also incorporated in the body of said lock.

In the embodiments described, for example, above, the primary actuator 20 constitutes a shield which surrounds and completely protects the secondary actuator 30. In addition, the fact that, in the unlocked position, the primary actuator 20 may turn freely, together with the lock 40, around the secondary actuator 30, hinders forcing of the lock, since there is no sufficiently firm point to exert the corresponding leverage forces with the intention of tampering with the device.

Finally, in Figure 21, one can observe an alternative embodiment of the secondary actuator 30 characterised in that the pulley 31A and the tubular member 30A are two separate members. They may be coupled to each other by means of additional locking and rotation transmission members 70 and 71 incorporated into each of the members.

Such modularity of members provides the invention with desirable characteristics of adaptability to the distinct motorcycle models on the market, all of which, of course, whilst keeping the manufacture costs within reasonable limits.

As one can see, the advantages of the new improved anti-theft gas grip are extensive and varied. Among such one could emphasise the facility of incorporating said grip to any motorcycle, substituting the conventional gas grip with which they leave the factory and providing the motorcycle with an element of anti-theft protection which was previously lacking, ease and comfort in use, and the fact that the appearance of the motorcycle is not altered.

It should be understood that, within the scope of the following claims, numerous modifications and substitutions are possible and obvious with respect to what has been described as invention example.

## Claims

1. Anti-theft gas grip for motorcycles and the like, of the type of grip that is arranged at one of the ends of the handlebar and basically constituted by a tubular control substantially secured in the axial direction of the handlebar but capable of being rotated, by the hand of the driver, around a distal end of the handlebar, in order to exert traction, by means of a pulley, lever or the like housed in a protective casing attached to the handlebar, on a gas cable coupled with the motorcycle carburetion system, there being found means provided for automatic return of the carburetion system and of the tubular command to the idling position, when the rotational action exerted by the hand of the driver ceases, in which said tubular control is substituted by a primary actuator, which receives the rotational movement of the hand of the driver, and by a secondary actuator coaxial and interior to the former, which is capable of receiving the rotational movement of the primary actuator and transmitting it to said pulley, lever or the like housed in the protective casing, there being found means provided for locking/unlocking which - in the locked position-engage the primary actuator with the secondary actuator, allowing that the secondary actuator receive said movement of the primary actuator, and which - in the unlocked position - disengages the two actuators from each other, preventing the secondary actuator, and thus the pulley, from receiving the rotational movement of the primary actuator, **characterised in that** the means of locking and unlocking are constituted by a locking device which includes a lock body (40), immovably attached to the primary actuator (20), and a lock catch (34), arranged in the secondary actuator (30).

2. Gas grip, according to the previous claim, **characterised in that** the primary (20) and secondary (30) actuators, which are coaxial with respect to each other and with respect to a distal end of the handlebar (1) on which is rotationally arranged the assembly of same, are limited in their axial displacement by means of the stop which is performed by an end centrifugal flange (22) of the primary actuator (20) and the pulley (31), lever or the like of the secondary actuator, with the interior walls of the protective casing (7, 10) securely mounted on the handlebar (1).

3. Gas grip, according to claim 1, **characterised in that** the primary (20) and secondary (30) actuators, being coaxial with respect to each other and with respect to an end of the handlebar (1) on which is rotationally arranged the assembly of the same, are limited in their axial displacement by means, at one end, of the stop which is performed by the pulley (31), lever or the like of the secondary actuator (30) with the interior walls of the protective casing (7, 10) securely mounted on the handlebar (1) and, at the other end, by the withholding that a centripetal lip (54) of the secondary actuator (30) exerts on a stop member of the primary actuator.

4. Gas grip, according to claim 3, **characterised in that** the stop member of the primary actuator, which is mechanical relation with the centripetal lip (54) of the secondary actuator (30), forms part of the body of the lock (40) secured to said primary actuator (20).

5. Gas grip, according to claim 4, **characterised in that** the stop member of the body of the lock (40) of the primary actuator (20), with respect to the centripetal lip (54) of the secondary actuator (30), consists in one of the group that include those formed by a flange (42), radial teats and an open elastic washer (43) ("circlip").

6. Gas grip, according to claim 1, **characterised in that** the secondary actuator (30) consists in a member obtained by injection and forms a single member with the pulley, lever or the like arranged at one end, whilst at the other end it includes a metallic mounting at least in the area in which the lock catch is implemented.

7. Gas grip, according to claim 1, **characterised in that** the secondary actuator is constituted by a first tubular member obtained by injection which, at one end, includes the stop lip (33) and a metallic mounting (35) for the lock catch (34) and, at the other end, disposes of means of practicable coupling (70, 71) to a second replaceable member which constitutes the pulley (31A), lever or the like.

8. Gas grip according to claim 1, **characterised in that** the primary actuator (20) is of mechanically resistant material.
